# EUROPEAN PATENT SPECIFICATION

(11) **EP 3 331 203 B1**
(45) Date of publication and mention of the grant of the patent: **04.09.2019**
(21) Application number: 18153987.5
(22) Date of filing: 22.12.2009
(51) Int. Cl.: H04L 12/58, H04M 3/53, G06F 15/16

(54) **INSTANT COMMUNICATION WITH INSTANT TEXT DATA AND VOICE DATA**
UNMITTELBARE KOMMUNIKATION MIT UNMITTELBAREN TEXTDATEN UND SPRACHDATEN
COMMUNICATION INSTANTANÉE AVEC DONNÉES TEXTUELLES ET DONNÉES VOCALES INSTANTANÉES

(30) Priority: 31.12.2008 CN 200810187735; 21.12.2009 US 655080
(43) Date of publication of application: 06.06.2018
(62) Divisional of application: 09836516.6
(73) Proprietor: Alibaba Group Holding Limited, Grand Cayman (KY)
(72) Inventor: LV, Kaili, Hangzhou (CN); ZHANG, Zheng, Hangzhou (CN); HUA, Bingyang, Hangzhou (CN); LIU, Zengguang, Hangzhou (CN); SU, Jie, Hangzhou (CN); MENG, Chaofeng, Hangzhou (CN); YUAN, Huaibin, Hangzhou (CN)
(74) Representative: Gill, David Alan

(56) References cited:
- WO-A1-02/093889
- US-A1- 2004 003 041
- US-A1- 2008 194 260
- US-B1- 7 058 036

## Description

### CROSS REFERENCE TO OTHER APPLICATIONS

This application claims priority to People's Republic of China Patent Application No. 200810187735.4 entitled INSTANT COMMUNICATION METHOD, INSTANT COMMUNICATION SERVER, SPEECH SERVER AND SYSTEM THEREOF, filed December 31, 2008.

### FIELD OF INVENTION

The present application relates to electronic communication, and in particular to message based communication.

### BACKGROUND OF THE INVENTION

The number of companies participating in Internet based e-commerce has been steadily increasing. There is growing competition among e-commerce websites. An important measure of website performance is its communication capabilities. Successful websites usually are capable of keeping the visitors engaged and providing easy communication with the visitors. Presently, many websites are configured with Web-based Instant Messaging (IM) software that allows users to communicate with the websites' support personnel. IM software allows people to identify online users and exchange information in real time.

Many website owners such as small businesses find it difficult to provide IM support since they are often unable to keep a dedicated website receptionist at the computer constantly. When customers make inquiries through the website, if the website owners cannot provide timely response, business opportunities may be lost.

The present invention is defined in the independent claims.

### BRIEF DESCRIPTION OF THE DRAWINGS

Various embodiments of the invention are disclosed in the following detailed description and the accompanying drawings.
FIG. 1 is a block diagram illustrating an embodiment of a system that supports instant messaging with speech.
FIG. 2 is a diagram illustrating an example setup for instant communication with voice support.
FIG. 3 is a flowchart illustrating an embodiment of an instant communication process.
FIG. 4 is a flowchart illustrating another embodiment of an instant communication process.
FIG. 5 is a block diagram illustrating an embodiment of an instant communication server.
FIG. 6 is a block diagram illustrating an embodiment of a speech server.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

Instant Messaging (IM) based communication with voice capability is described. As used herein, IM refers to a form of communication in which users communicate substantially in real-time. In some embodiments, text data inputted by a first user (e.g., a website visitor) using special instant message software. The text data is transformed into speech data, and sent to a preconfigured phone number to be played to a second user (e.g., a website owner). After listening to the speech data, the second user may respond directly by voice, and the voice data is received by the server and sent to the first user's terminal to be played. Therefore, the website owner can communicate with website visitors anytime and anywhere without relying on text based messaging, thereby improving customer service.

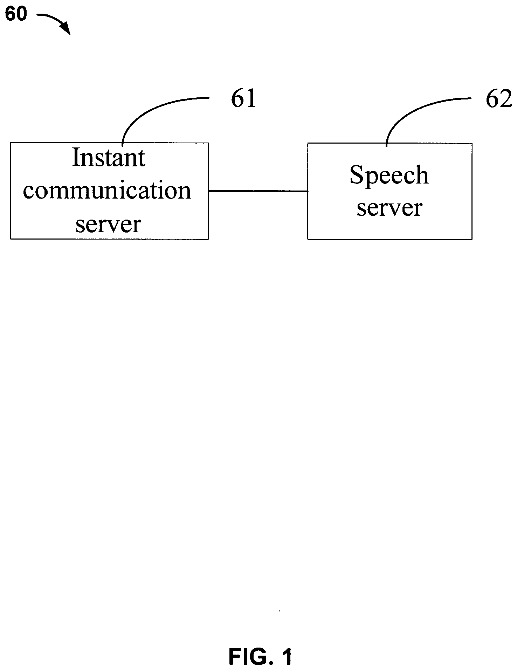

FIG. 1 is a block diagram illustrating an embodiment of a system that supports instant messaging with speech. In the example shown, system 60 includes an instant communication server 61 and a speech server 62, which may be implemented as software processes executing on separate devices or on the same device. In some embodiments, the system is configured as dedicated device and is owned and operated by the website owner. In some embodiments, the system is a shared system offering software as service to various subscribers. The instant communication server 61 is adapted to receive text data input by a user at a first user terminal. The first user terminal may be a computer, a personal digital assistant, a mobile device, or other web-enabled device that supports instant communication software. The instant communication server is further configured to send the text data to the speech server, receive speech data sent by the speech server, send the speech data to the first user terminal via the Web-based instant communication software, and instruct the first user terminal to play the speech data. The speech server 62 is configured to receive the text data sent via the instant communication software from the first user terminal and received and forwarded by the instant communication server, transform the text data into speech data, send the speech data via a preconfigured phone number to a corresponding second user terminal. The speech server is further configured to receive speech data sent by the second user from the second user terminal, and send the speech data from the second user to the instant communication server to be forwarded to the first user terminal.

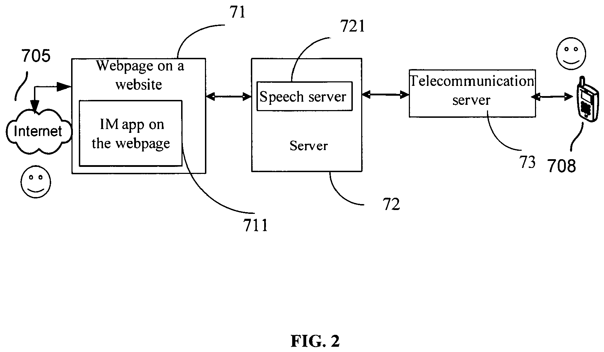

FIG. 2 is a diagram illustrating an example setup for instant communication with voice support. The setup includes a visitor terminal 71, an instant communication server 72 which includes a speech server application 721 executing on the instant communication server, and a telecommunication server 73. The visitor terminal can be a computer, a personal digital assistant, a mobile device, or other web-enabled device that allows the user to access instant communication service on the instant communication server. In this example, the instant communication server also functions as the web server for providing web pages or other user interface via a network 705 such as the Internet.

Using the visitor terminal, the website visitor inputs text data via an IM application 711 (e.g., a web browser based IM application (referred to as WebIM)) that is built in a webpage 71 of the website. IM application 711 sends the text data to a speech server 721 on server 72. The speech server 721 includes Text To Speech (TTS) software for transforming the text data into speech data. A variety of TTS software/engines may be used, for example ReadPlease®, ProVerbe Speech unit, TextAloud®, etc. On the speech server 721, a phone number associated with the website (e.g., the phone number of the website owner) is pre-configured and stored.

Once text data is received and transformed into speech, the speech server sends a communication request to the telecommunication server 73. In some embodiments, the communication request includes the preconfigured phone number and the speech data. The speech data may be formatted using MP3 or other audio format. In some embodiments, telecommunication server 73 supports Session Initiation Protocol (SIP) and/or Voice-Over-IP (VoIP), and has th e capabilities to connect to th e Public Switched Telephone Network (PSTN) and put calls through to a regular landline phone or mobile phone. In some embodiments, the telecommunication server by Yuantel of Beijing, China is used. When the call is put through, the speech data is played on a user terminal 708 associated with the phone number (such as a telephone) and the website owner is prompted to leave a voice message reply. The speech server 721 receives speech reply from the website owner made via user terminal 708 and forwards the reply to IM Application 711. IM application 711 displays a speech file storing the speech reply, and a player associated with the IM application (such as an audio player plug-in) allows the visitor to play the speech file. The visitor may enter additional text data via the IM application and the process is repeated.

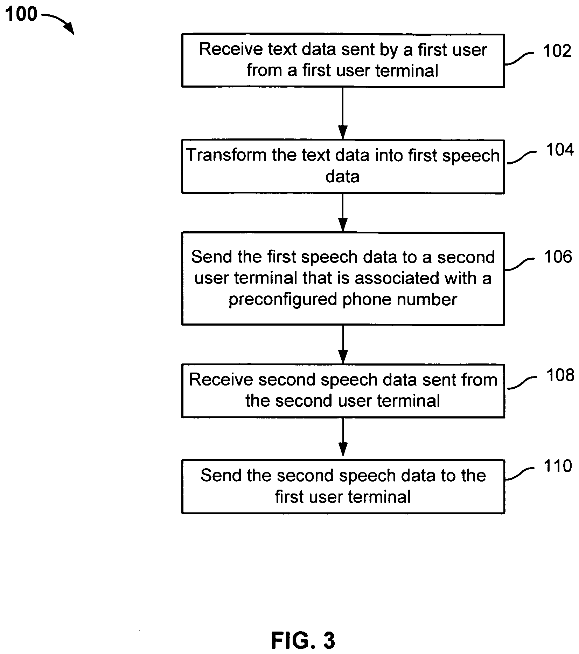

FIG. 3 is a flowchart illustrating an embodiment of an instant communication process. In this example, process 100 may be implemented on a system such as 60. The process starts at 102, when text data entered by the user via a first user terminal is received. In some embodiments, the text data is initially received at an instant communication server such as 61. At 104, the text data is transformed into a first set of speech data using the TTS software. In some embodiments, the text data is sent to a speech server such as 62 for the transformation. At 106, the first set of speech data is sent to a second user terminal that is associated with a preconfigured phone number. In some embodiments, the phone number is preconfigured on the speech server, which forwards the speech data to the second user terminal.

At 108, a second set of speech data sent from the second user terminal in response to the first set of speech data is received. The speech server is configured to receive the second set of speech data in this example. At 110, the second set of speech data is sent to the first user terminal to be played. In various embodiments, the second set of speech data may be sent directly from the speech server to the first user terminal, or sent to the instant communication server then forwarded to be displayed in connection with the WebIM application executing in the first user terminal.

The process may be repeated as the first user continues to enter additional text data.

In some embodiments, software code for implementing WebIM functions is added to webpage HTML code of the website to facilitate data transmission between website visitors and a server serving the website. An IM client is installed at a server of the website owner, with which the website owner can exchange text messages with website visitors using the IM client. Additional code (such as JavaScript code) is added to the webpage code text data to be sent to the speech server, speech data to be sent by the speech server, and the received speech data to be sent to a player of a website visitor's terminal. The player may be an independent application or a plug-in that is a part of the WebIM application executing on the first user terminal.

In step 104, the speech server transforms the text data into first speech data. In this embodiment, the text data is transformed for example using a speech synthesis technique TTS (Text To Speech). Other speech synthesis technology can also be used to transform text data into speech data. TTS, also known as speech transformation technology, is developed to transform text information into audible sound information, and via computer speech synthesis, any text can be transformed into highly natural speech. The technology is well known in the art, and further description is omitted.

In step 106, sending the first speech data to the second user terminal corresponding to the preconfigured phone number includes:

The speech server sends the first speech data to a telecommunication server, the telecommunication server connects to the PSTN and dials the preconfigured phone number on receipt of the first speech data, and sends the first speech data when the call is put through; that is, after transforming the text data into the first speech data, the speech server sends a communication request to the telecommunication server, the telecommunication server searches for a corresponding phone number based on the content of the request, and sends the first speech data to the second user terminal corresponding to the phone number when the call is put through, the second user terminal may respond and return responding speech data to the speech server via the telecommunication server after hearing a sound indication.

In this example, during the session, the speech server is configured to obtain all speech data, and the telecommunication server is configured to collect the second set of speech data returned by the second user terminal. Specifically, the speech server collects a voice response made after the sound indication by the second user terminal, and sends the second speech data to the Web-based instant communication software on the website. The Web-based instant communication software displays a speech file, and the user can use player software to hear the message replied from the second user terminal.

In some embodiments, the preconfigured phone number includes multiple phone numbers, and various intelligent response schemes can be configured. For example, different phone numbers from sales people from different regions are preconfigured on the server. Based on the Internet Protocol (IP) address of the first user terminal from which the text data is sent, the location of the website visitor may be determined. Thus, the transformed voice message is sent to the phone number that corresponds to or is in close proximity to the region from which the text message originates. As another example, different phone numbers may configured for different time periods such that a landline office telephone is configured to receive the messages during working hours, and a mobile phone is called afterhours. These two examples are described in greater detail below.

If the preconfigured phone number includes multiple phone numbers, i.e., one website owner may be associated with several phone numbers, for example, a phone number of Beijing, a phone number of Shanghai and a phone number of Shenzhen, and the step of initiating a call with the preconfigured phone number includes: determining an IP address of the first user terminal, determining a region to which the first user terminal belongs, selecting a phone number of an appropriate region based on the determination, and initiating a call with the selected phone number.

For example, a Beijing company markets and sells a device on a website, and designates contacts A and B as local distributor in Shanghai and Shenzen, respectively. The Beijing company may provide a main contact number of the company, contact numbers of the local distributors with IP addresses of their regions in a database of the speech server. The speech server determines an IP address of a website visitor, and if it determines that the visitor is from Beijing, a preconfigured phone number of the Beijing company is dialed; if it determines that the visitor is from Shanghai, a phone number configured with the Shanghai distributor is dialed; and if it determines that the visitor is from Shenzhen, a phone number configured with the Shenzhen distributor is dialed.

Similarly, if the preconfigured phone number includes phone numbers of multiple time periods, the step of the speech server initiating a call with the preconfigured phone number includes: determining a time when the first user terminal sends the text data; selecting a phone number of a corresponding time period based on the determined time; and initiating a call with the selected phone number.

For example, the website owner may set phone numbers answered in different time periods, for example, a fixed phone number of the website owner may be called in working hours, a mobile phone number of the website owner may be called off-work.

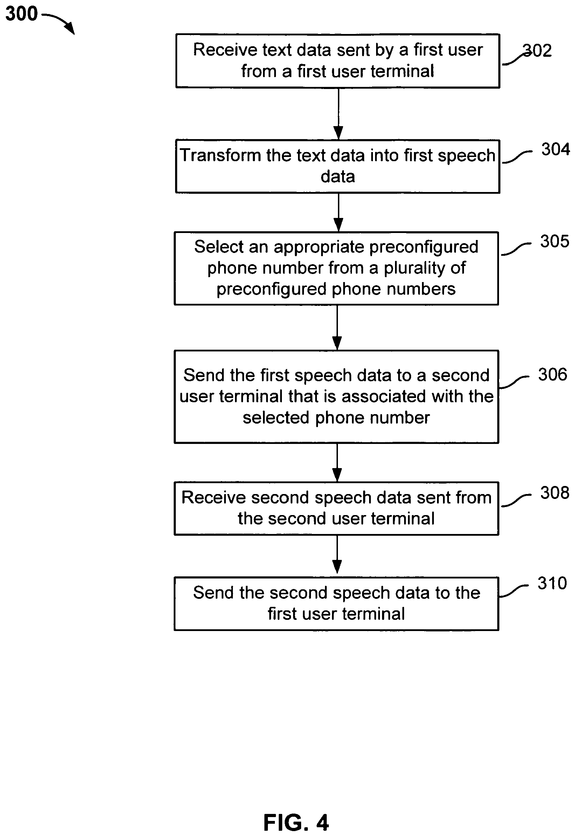

FIG. 4 is a flowchart illustrating another embodiment of an instant communication process. In this example, process 300 may be implemented on a system such as 60. The process starts at 302, when text data entered by the user via a first user terminal is received. At 304, the text data is transformed into a first set of speech data using TTS software.

At 305, an appropriate phone number is selected from a plurality of preconfigured phone numbers. The originating region of the text data, time of contact, and many other appropriate criteria can be used. At 306, the first set of speech data is sent to a second user terminal that is associated with the selected phone number.

At 308, a second set of speech data sent from the second user terminal in response to the first set of speech data is received. The speech server is configured to receive the second set of speech data in this example. At 310, the second set of speech data is sent to the first user terminal to be played. In various embodiments, the second set of speech data may be sent directly from the speech server to the first user terminal, or sent to the instant communication server then forwarded to the WebIM application executing in the first user terminal. In some embodiments, a data file icon or the like may be displayed in connection with an audio player program, and the reply speech data is played at the first user's option. In some embodiments, the data is directly played.

The process may be repeated as the first user continues to enter additional text data.

As can be seen, in the embodiment WebIM software can send text data inputted by the user to the speech server. The speech server transforms the text data into speech data, dials the preconfigured phone number, and plays the speech data when the phone number is put through. Then the person answering the call leaves a message after a sound indication. The message is transformed by the speech server into a speech file and sent to the WebIM to be played by a computer. The website owner may communicate with the visitor via a mobile phone or a fixed phone anytime and anywhere, which may improve the reception of Internet marketing, reduce prerequisite requirements for e-commerce; and connect the Internet and the telecommunication network.

For example, a typical small company sets up a website. The owner travels a lot and is thus unable to answer inquiries from the web in a timely manner. The website cannot keep its visitors engaged and potential business opportunities are often lost.

Using a system described above, the owner may bind his mobile phone number with the website, and receive visitors' inquiries by phone. For example, a visitor A visits the website and asks via WebIM: "What's the price for a rolling door?" In a traditional WebIM mode, no one would answer the visitor. But now the owner will receive a call and hear the speech "Visitor A says: What's the price for a rolling door, question mark, please leave a message for visitor A after the sound indication, beep". The owner may respond with "Hello, the cost varies depending on size and quantity. Please leave your phone number, I'll call you back." Then visitor A sees that the owner has sent a speech file on the WebIM, and can play back the message. The visitor may reply with his phone number. Then the owner receives another call and hears the phone number. Finally, the owner may call visitor A directly upon obtaining the phone number. A potential business opportunity is therefore captured.

Embodiments of the invention not only transform text data into speech data, but also allow website visitors and website owners to communicate freely from the separated Internet and telecommunication network.

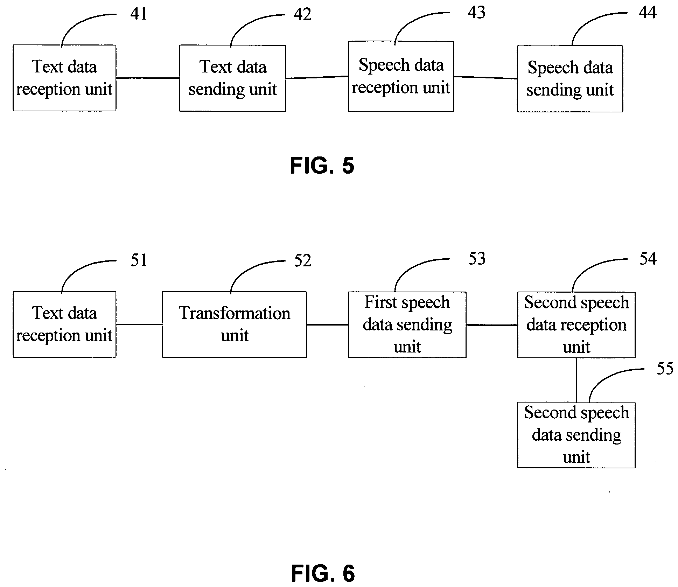

FIG. 5 is a block diagram illustrating an embodiment of an instant communication server. In this example, the instant communication server includes: a text data reception unit 41, a text sending unit 42, a speech data reception unit 43, and a speech data sending unit 44. The text data reception unit 41 is adapted to receive via Web-based instant communication software text data inputted by a first user terminal; the text sending unit 42 is adapted to send the text data received by the text data reception unit to a speech server; the speech data reception unit 43 is adapted to receive speech data sent by the speech server; the speech data sending unit 44 is adapted to send via the instant communication software the speech data received by the speech data reception unit to the first user terminal, particularly, the speech data may be sent to the first user terminal via the Web-based instant communication software.

By adding code in a webpage source file of the website, e.g. JavaScript code, the web page of the website not only has standard WebIM functions, but also has the function to transmit text data of the WebIM to a speech server and the function to receive speech files sent from the speech server.

For example, after a visitor inputs text data in the WebIM and sends it, the code transmits the text data to the speech server. A program on the speech server integrated with the speech synthesis technology such as TTS may transform the text data into speech data. On the other hand, the speech server sends speech data directly to the WebIM if receiving the speech data from a phone.

FIG. 6 is a block diagram illustrating an embodiment of a speech server. In the example shown, the speech server includes: a text data reception unit 51, a transformation unit 52, a first speech data sending unit 53, a second speech data reception unit 54, and a second speech data sending unit 55. The text data reception unit 51 is adapted to receive text data sent via instant communication software by a first user terminal; the transformation unit 52 is adapted to transform the text data received by the text data reception unit 51 into first speech data; the first speech data sending unit 53 is adapted to send via a preconfigured phone number the first speech data transformed by the transformation unit 52 to a corresponding second user terminal; the second speech data reception unit is adapted to receive second speech data sent by the second user terminal; the second speech data sending unit is adapted to send via the instant communication software the second speech data received by the second speech data reception unit 53 to the first user terminal.

The text data reception unit 51 sends text data subsequently sent by the first user terminal to the transformation unit 52, when receiving the text data subsequently sent via Web-based instant communication software by the first user terminal; and functions of the first speech data sending unit 53, the second speech data reception unit 54 and the second speech data sending unit 55 are performed subsequently.

The first speech data sending unit 53 includes: an initiation unit and a data sending unit. The initiation unit is adapted to initiate a call with the preconfigured phone number; the data sending unit is adapted to send the first speech data to a telecommunication server, and instruct the telecommunication server to play the first speech data when the call is put through; the second speech data reception unit is adapted to receive the second speech data returned from the second user terminal and collected by the communication server.

The speech server further includes: a pre-configuration unit, adapted to pre-bind a website with a phone number of the second user terminal, a plurality of phone numbers of the second user terminal of different regions, or phone numbers of the second user terminal of different time periods.

According to some embodiments, if the pre-configuration unit pre-binds the website with a plurality of phone numbers of the second user terminal of different regions, the second speech data sending unit further includes: a determination unit and a number sending unit. The determination unit is adapted to determine an IP address of the first user terminal, determine a region to which the first user terminal belongs, and select a phone number of a corresponding region from the plurality of phone numbers in the pre-configuration unit; the number sending unit is adapted to send the selected phone number to the initiation unit.

According to another preferred embodiment, if the pre-configuration unit pre-binds the website with phone numbers of the second user terminal of different time periods, the second speech data sending unit further includes: a determination unit, a selection unit and a number sending unit. The determination unit is adapted to determine a time when the first user terminal sends the text data; the selection unit is adapted to select a phone number of a corresponding time period in the pre-configuration unit based on the determined time; the number sending unit is adapted to send the selected number to the initiation unit.

It would be understood by those skilled in the art from the above descriptions of the embodiments that components of the above systems are described in units with different functions. The units described above can be implemented as software components executing on one or more general purpose processors, as hardware such as programmable logic devices and/or Application Specific Integrated Circuits designed to perform certain functions or a combination thereof. In some embodiments, the units can be embodied by a form of software products which can be stored in a nonvolatile storage medium (such as optical disk, flash storage device, mobile hard disk, etc.), including a number of instructions for making a computer device (such as personal computers, servers, network equipments, etc.) implement the methods described in the embodiments of the present invention. The units may be implemented on a single device or distributed across multiple devices. The functions of the units may be merged into one another or further split into multiple sub-units. The contribution of the technical solution of the invention can be represented via software products, which may be stored in storage medium such as ROM/RAM, magnetic disk and optical discs, and includes several instructions to enable a computer device (e.g. personal computer, server, or network device) to perform a method described in an embodiment or part of an embodiment of the invention.

Preferred embodiments of the invention are described above. It should be noted that, various modification and alternations may be made by those skilled in the art without departing from the scope of the invention as defined in the appended claims, which therefore should be included in the scope of the invention.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A method, comprising:
receiving (302) text data sent by a first user from a first user terminal (705);
transforming (304), using a speech server (721), the text data into first speech data; sending (306), using a telecommunication server (73), the first speech data to a second user terminal (708) that is associated with a preconfigured phone number, and
wherein the method further comprises:
selecting (305) the preconfigured phone number from a plurality of preconfigured phone numbers, wherein the plurality of preconfigured phone numbers corresponds to a plurality of time periods, wherein the selecting of the preconfigured phone number comprises:
determining a time associated with receiving the text data; and
selecting the preconfigured phone number from the plurality of preconfigured phone number based on the time associated with receiving the text data and the plurality of time periods;
initiating a call, using the telecommunication server (73), to the second user terminal via the preconfigured phone number;
wherein the sending of the first speech data to the second user terminal comprises:
sending, using the speech server, the first speech data to the telecommunication server (73); and
instructing the telecommunication server (73) to send the first speech data to the second user terminal in response to a determination that the call to the second user terminal (708) is put through;
the method further comprising:
receiving (308) second speech data sent from the second user terminal in response to the first speech data; and
sending (310) the second speech data to the first user terminal, comprising:
sending a speech file comprising the second speech data to the first user terminal; and
playing the speech file on the first user terminal.

2. The method of claim 1, wherein the text data is an Instant Message entered by the first user at the first user terminal.

3. The method of claim 1, wherein the text data is sent to the speech server configured to perform text to speech.

4. The method of claim 1, wherein the preconfigured phone number is configured on a speech server configured to transform the text data into the first speech data.

5. The method of claim 1, wherein the plurality of preconfigured phone numbers corresponds to a plurality of regions.

6. The method of claim 5, further comprising selecting the preconfigured phone number from the plurality of preconfigured phone numbers, comprising:
determining an Internet Protocol "IP" address associated with the first user terminal;
determining a region associated with the IP address; and
selecting the preconfigured phone number from the plurality of preconfigured phone numbers based on the region associated with the IP address and the plurality of regions associated with the preconfigured phone numbers.

7. A system comprising:
one or more processors configured to:
receive text data sent by a first user from a first user terminal (705);
transform, using a speech server (721), the text data into first speech data; and to
send, using a telecommunication server (73), the first speech data to a second user terminal (708) that is associated with a preconfigured phone number,
wherein the one or more processors is further configured to:
select the preconfigured phone number from a plurality of preconfigured phone numbers, wherein the plurality of preconfigured phone numbers corresponds to a plurality of time periods, wherein the selecting of the preconfigured phone number comprises to:
determine a time associated with receiving the text data; and
select the preconfigured phone number from the plurality of preconfigured phone number based on the time associated with receiving the text data and the plurality of time periods;
initiate a call, using the telecommunication server (73), to the second user terminal via the preconfigured phone number;
wherein the sending of the first speech data to the second user terminal comprises to:
send, using the speech server, the first speech data to the telecommunication server (73); and
instruct the telecommunication server (73) to send the first speech data to the second user terminal in response to a determination that the call to the second user terminal (708) is put through;
the one or more processors further configured to:
receive second speech data sent from the second user terminal in response to the first speech data; and
send the second speech data to the first user terminal, comprising to:
send a speech file comprising the second speech data to the first user terminal; and
play the speech file on the first user terminal; and
one or more memories coupled to the one or more processors, configured to provide the one or more processors with instructions.

8. The system of claim 7, wherein the text data is an Instant Message entered by the first user at the first user terminal.

9. The system of claim 7, wherein the text data is sent to the speech server configured to perform text to speech.

10. The system of claim 7, wherein the preconfigured phone number is configured on a speech server configured to transform the text data into the first speech data.

11. The system of claim 7, wherein the plurality of preconfigured phone numbers corresponds to a plurality of regions.

12. The system of claim 11, wherein the one or more processors are further configured to select the preconfigured phone number from the plurality of preconfigured phone numbers, comprising:
determining an Internet Protocol "IP" address associated with the first user terminal;
determining a location associated with the first user terminal; and
selecting the preconfigured phone number from the plurality of preconfigured phone numbers based on the region associated with the IP address and the plurality of regions associated with the preconfigured phone numbers.

13. A computer program product being embodied in a computer readable storage medium and comprising computer instructions that when executed on one or more processors cause the one or more processors to execute the steps of:
receiving text data sent by a first user from a first user terminal (705);
transforming, using a speech server (721), the text data into first speech data;
sending, using a telecommunication server (73), the first speech data to a second user terminal (708) that is associated with a preconfigured phone number, and
said computer program product comprising instructions to cause the one or more processors to execute the further steps of:
selecting the preconfigured phone number from a plurality of preconfigured phone numbers, wherein the plurality of preconfigured phone numbers corresponds to a plurality of time periods, wherein the selecting of the preconfigured phone number comprises:
initiating a call, using the telecommunication server (73), to the second user terminal via the preconfigured phone number; wherein the sending of the first speech data to the second user terminal comprises:
sending, using the speech server, the first speech data to the telecommunication server (73); and
instructing the telecommunication server (73) to send the first speech data to the second user terminal in response to a determination that the call to the second user terminal (708) is put through;
said computer program product comprising instructions to cause the one or more processors to execute the further steps of:
receiving second speech data sent from the second user terminal in response to the first speech data; and
sending the second speech data to the first user terminal, comprising:
sending a speech file comprising the second speech data to the first user terminal; and
playing the speech file on the first user terminal.

## Patentansprüche

1. Verfahren, umfassend:
Empfangen (302) von Textdaten, die von einem ersten Benutzer gesendet werden, von einem ersten Benutzerendgerät (705);
Umwandeln (304) der Textdaten in erste Sprachdaten unter Verwendung eines Sprachservers (721);
Senden (306) der ersten Sprachdaten unter Verwendung eines Telekommunikationsservers (73) an ein zweites Benutzerendgerät (708), das mit einer vorkonfigurierten Telefonnummer assoziiert ist, und wobei das Verfahren ferner Folgendes umfasst:
Auswählen (305) der vorkonfigurierten Telefonnummer aus einer Vielzahl von vorkonfigurierten Telefonnummern, wobei die Vielzahl von vorkonfigurierten Telefonnummern einer Vielzahl von Zeitperioden entspricht, wobei das Auswählen der vorkonfigurierten Telefonnummer Folgendes umfasst:
Bestimmen einer Zeit, die mit dem Empfangen der Textdaten assoziiert ist; und
Auswählen der vorkonfigurierten Telefonnummer aus der Vielzahl von vorkonfigurierten Telefonnummern auf der Basis der Zeit, die mit dem Empfangen der Textdaten assoziiert ist, und der Vielzahl von Zeitperioden;
Initiieren eines Anrufs unter Verwendung des Telekommunikationsservers (73) an das zweite Benutzerendgerät über die vorkonfigurierte Telefonnummer;
wobei das Senden der ersten Sprachdaten an das zweite Benutzerendgerät Folgendes umfasst:
Senden der ersten Sprachdaten an den Telekommunikationsserver (73) unter Verwendung des Sprachservers; und
Anweisen des Telekommunikationsservers (73), die ersten Sprachdaten an das zweite Benutzerendgerät zu senden, als Reaktion auf eine Bestimmung, dass der Anruf an das zweite Benutzerendgerät (708) durchgestellt wird;
wobei das Verfahren ferner Folgendes umfasst:
Empfangen (308) von zweiten Sprachdaten, die von dem zweiten Benutzerendgerät gesendet werden, als Reaktion auf die ersten Sprachdaten; und
Senden (310) der zweiten Sprachdaten an das erste Benutzerendgerät, umfassend:
Senden einer Sprachdatei, umfassend die zweiten Sprachdaten, an das erste Benutzerendgerät; und
Abspielen der Sprachdatei auf dem ersten Benutzerendgerät.

2. Verfahren nach Anspruch 1, wobei die Textdaten eine Sofortnachricht ist, die von dem ersten Benutzer an dem ersten Benutzerendgerät eingegeben wird.

3. Verfahren nach Anspruch 1, wobei die Textdaten an den Sprachserver gesendet werden, der konfiguriert ist, um die Umwandlung von Text in Sprache durchzuführen.

4. Verfahren nach Anspruch 1, wobei die vorkonfigurierte Telefonnummer auf einem Sprachserver konfiguriert ist, der konfiguriert ist, um die Textdaten in die ersten Sprachdaten umzuwandeln.

5. Verfahren nach Anspruch 1, wobei die Vielzahl von vorkonfigurierten Telefonnummern einer Vielzahl von Regionen entspricht.

6. Verfahren nach Anspruch 5, ferner umfassend das Auswählen der vorkonfigurierten Telefonnummer aus der Vielzahl von vorkonfigurierten Telefonnummern, umfassend:
Bestimmen einer Internetprotokolladresse, "IP"-Adresse, die mit dem ersten Benutzerendgerät assoziiert ist;
Bestimmen einer Region, die mit der IP-Adresse assoziiert ist; und
Auswählen der vorkonfigurierten Telefonnummer aus der Vielzahl von vorkonfigurierten Telefonnummern auf der Basis der Region, die mit der IP-Adresse assoziiert ist, und der Vielzahl von Regionen, die mit den vorkonfigurierten Telefonnummern assoziiert ist.

7. System, umfassend:
einen oder mehrere Prozessoren, die für Folgendes konfiguriert sind:
Empfangen von Textdaten, die von einem ersten Benutzer gesendet werden, von einem ersten Benutzerendgerät (705);
Umwandeln der Textdaten in erste Sprachdaten unter Verwendung eines Sprachservers (721); und
Senden der ersten Sprachdaten unter Verwendung eines Telekommunikationsservers (73) an ein zweites Benutzerendgerät (708), das mit einer vorkonfigurierten Telefonnummer assoziiert ist,
wobei der eine oder die mehreren Prozessoren ferner für Folgendes konfiguriert sind:
Auswählen der vorkonfigurierten Telefonnummer aus einer Vielzahl von vorkonfigurierten Telefonnummern, wobei die Vielzahl von vorkonfigurierten Telefonnummern einer Vielzahl von Zeitperioden entspricht, wobei das Auswählen der vorkonfigurierten Telefonnummer Folgendes umfasst:
Bestimmen einer Zeit, die mit dem Empfangen der Textdaten assoziiert ist; und
Auswählen der vorkonfigurierten Telefonnummer aus der Vielzahl von vorkonfigurierten Telefonnummern auf der Basis der Zeit, die mit dem Empfangen der Textdaten assoziiert ist, und der Vielzahl von Zeitperioden;
Initiieren eines Anrufs unter Verwendung des Telekommunikationsservers (73) an das zweite Benutzerendgerät über die vorkonfigurierte Telefonnummer;
wobei das Senden der ersten Sprachdaten an das zweite Benutzerendgerät Folgendes umfasst:
Senden der ersten Sprachdaten an den Telekommunikationsserver (73) unter Verwendung des Sprachservers; und
Anweisen des Telekommunikationsservers (73), die ersten Sprachdaten an das zweite Benutzerendgerät zu senden, als Reaktion auf eine Bestimmung, dass der Anruf an das zweite Benutzerendgerät (708) durchgestellt wird;
wobei der eine oder die mehreren Prozessoren ferner für Folgendes konfiguriert sind:
Empfangen von zweiten Sprachdaten, die von dem zweiten Benutzerendgerät gesendet werden, als Reaktion auf die ersten Sprachdaten; und
Senden der zweiten Sprachdaten an das erste Benutzerendgerät, umfassend:
Senden einer Sprachdatei, umfassend die zweiten Sprachdaten, an das erste Benutzerendgerät; und
Abspielen der Sprachdatei auf dem ersten Benutzerendgerät; und
einen oder mehrere Speicher, die mit dem einen oder den mehreren Prozessoren gekoppelt sind und konfiguriert sind, um dem einen oder den mehreren Prozessoren Anweisungen bereitzustellen.

8. System nach Anspruch 7, wobei die Textdaten eine Sofortnachricht ist, die von dem ersten Benutzer an dem ersten Benutzerendgerät eingegeben wird.

9. System nach Anspruch 7, wobei die Textdaten an den Sprachserver gesendet werden, der konfiguriert ist, um die Umwandlung von Text in Sprache durchzuführen.

10. System nach Anspruch 7, wobei die vorkonfigurierte Telefonnummer auf einem Sprachserver konfiguriert ist, der konfiguriert ist, um die Textdaten in die ersten Sprachdaten umzuwandeln.

11. System nach Anspruch 7, wobei die Vielzahl von vorkonfigurierten Telefonnummern einer Vielzahl von Regionen entspricht.

12. System nach Anspruch 11, wobei der eine oder die mehreren Prozessoren ferner für Folgendes konfiguriert sind: Auswählen der vorkonfigurierten Telefonnummer aus der Vielzahl von vorkonfigurierten Telefonnummern, umfassend:
Bestimmen einer Internetprotokolladresse, "IP"-Adresse, die mit dem ersten Benutzerendgerät assoziiert ist;
Bestimmen eines Standorts, der mit dem ersten Benutzerendgerät assoziiert ist; und
Auswählen der vorkonfigurierten Telefonnummer aus der Vielzahl von vorkonfigurierten Telefonnummern auf der Basis der Region, die mit der IP-Adresse assoziiert ist, und der Vielzahl von Regionen, die mit den vorkonfigurierten Telefonnummern assoziiert ist.

13. Computerprogrammprodukt, das in einem computerlesbaren Speichermedium enthalten ist und Computeranweisungen umfasst, die, wenn sie von einem oder mehreren Prozessoren ausgeführt werden, den einen oder die mehreren Prozessoren veranlassen, die folgenden Schritte auszuführen:
Empfangen von Textdaten, die von einem ersten Benutzer gesendet werden, von einem ersten Benutzerendgerät (705);
Umwandeln der Textdaten in erste Sprachdaten unter Verwendung eines Sprachservers (721);
Senden der ersten Sprachdaten unter Verwendung eines Telekommunikationsservers (73) an ein zweites Benutzerendgerät (708), das mit einer vorkonfigurierten Telefonnummer assoziiert ist, und
wobei das Computerprogrammprodukt Anweisungen umfasst, die den einen oder die mehreren Prozessoren veranlassen, die folgenden weiteren Schritte auszuführen: Auswählen der vorkonfigurierten Telefonnummer aus einer Vielzahl von vorkonfigurierten Telefonnummern, wobei die Vielzahl von vorkonfigurierten Telefonnummern einer Vielzahl von Zeitperioden entspricht, wobei das Auswählen der vorkonfigurierten Telefonnummer Folgendes umfasst:
Initiieren eines Anrufs unter Verwendung des Telekommunikationsservers (73) an das zweite Benutzerendgerät über die vorkonfigurierte Telefonnummer;
wobei das Senden der ersten Sprachdaten an das zweite Benutzerendgerät Folgendes umfasst:
Senden der ersten Sprachdaten an den Telekommunikationsserver (73) unter Verwendung des Sprachservers; und
Anweisen des Telekommunikationsservers (73), die ersten Sprachdaten an das zweite Benutzerendgerät zu senden, als Reaktion auf eine Bestimmung, dass der Anruf an das zweite Benutzerendgerät (708) durchgestellt wird;
wobei das Computerprogrammprodukt Anweisungen umfasst, die den einen oder die mehreren Prozessoren veranlassen, die folgenden weiteren Schritte auszuführen:
Empfangen von zweiten Sprachdaten, die von dem zweiten Benutzerendgerät gesendet werden, als Reaktion auf die ersten Sprachdaten; und
Senden der zweiten Sprachdaten an das erste Benutzerendgerät, umfassend:
Senden einer Sprachdatei, umfassend die zweiten Sprachdaten, an das erste Benutzerendgerät; und
Abspielen der Sprachdatei auf dem ersten Benutzerendgerät.

## Revendications

1. Un procédé, comprenant :
la réception (302) de données textuelles envoyées par un premier utilisateur à partir d'un premier terminal d'utilisateur (705),
la transformation (304), au moyen d'un serveur vocal (721), des données textuelles en premières données vocales,
l'envoi (306), au moyen d'un serveur de télécommunication (73), des premières données vocales à un deuxième terminal d'utilisateur (708) qui est associé à un numéro de téléphone préconfiguré, et où le procédé comprend en outre :
la sélection (305) du numéro de téléphone préconfiguré parmi une pluralité de numéros de téléphone préconfigurés, où la pluralité de numéros de téléphone préconfigurés correspond à une pluralité de périodes temporelles, où la sélection du numéro de téléphone préconfiguré comprend :
la détermination d'une heure associée à la réception des données textuelles, et
la sélection du numéro de téléphone préconfiguré parmi la pluralité de numéros de téléphone préconfigurés en fonction de l'heure associée à la réception des données textuelles et de la pluralité de périodes temporelles,
le lancement d'un appel, au moyen du serveur de télécommunication (73), vers le deuxième terminal d'utilisateur par l'intermédiaire du numéro de téléphone préconfiguré,
où l'envoi des premières données vocales au deuxième terminal d'utilisateur comprend :
l'envoi, au moyen du serveur vocal, des premières données vocales au serveur de télécommunication (73), et
l'ordre donné au serveur de télécommunication (73) d'envoyer les premières données vocales au deuxième terminal d'utilisateur en réponse à une détermination que l'appel vers le deuxième terminal d'utilisateur (708) est établi,
le procédé comprenant en outre :
la réception (308) de deuxièmes données vocales envoyées à partir du deuxième terminal d'utilisateur en réponse aux premières données vocales, et
l'envoi (310) des deuxièmes données vocales au premier terminal d'utilisateur, comprenant :
l'envoi d'un fichier vocal contenant les deuxièmes données vocales au premier terminal d'utilisateur, et
la lecture du fichier vocal sur le premier terminal d'utilisateur.

2. Le procédé selon la Revendication 1, où les données textuelles sont un message instantané entré par le premier utilisateur au niveau du premier terminal d'utilisateur.

3. Le procédé selon la Revendication 1, où les données textuelles sont envoyées au serveur vocal configuré de façon à exécuter une opération de texte à parole.

4. Le procédé selon la Revendication 1, où le numéro de téléphone préconfiguré est configuré sur un serveur vocal configuré de façon à transformer les données textuelles en les premières données vocales.

5. Le procédé selon la Revendication 1, où la pluralité de numéros de téléphone préconfigurés correspond à une pluralité de zones.

6. Le procédé selon la Revendication 5, comprenant en outre la sélection du numéro de téléphone préconfiguré parmi la pluralité de numéros de téléphone préconfigurés, comprenant :
la détermination d'une adresse protocole Internet "IP" associée au premier terminal d'utilisateur,
la détermination d'une zone associée à l'adresse IP, et
la sélection du numéro de téléphone préconfiguré parmi la pluralité de numéros de téléphone préconfigurés en fonction de la zone associée à l'adresse IP et de la pluralité de zones associées aux numéros de téléphone préconfigurés.

7. Un système comprenant :
un ou plusieurs processeurs configurés de façon à :
recevoir des données textuelles envoyées par un premier utilisateur à partir d'un premier terminal d'utilisateur (705),
transformer, au moyen d'un serveur vocal (721), les données textuelles en premières données vocales, et
envoyer, au moyen d'un serveur de télécommunication (73), les premières données vocales à un deuxième terminal d'utilisateur (708) qui est associé à un numéro de téléphone préconfiguré,
où les un ou plusieurs processeurs sont configurés en outre de façon à :
sélectionner le numéro de téléphone préconfiguré parmi une pluralité de numéros de téléphone préconfigurés, où la pluralité de numéros de téléphone préconfigurés correspond à une pluralité de périodes temporelles, où la sélection du numéro de téléphone préconfiguré comprend :
la détermination d'une heure associée à la réception des données textuelles, et
la sélection du numéro de téléphone préconfiguré parmi la pluralité de numéros de téléphone préconfigurés en fonction de l'heure associée à la réception des données textuelles et de la pluralité de périodes temporelles,
le lancement d'un appel, au moyen du serveur de télécommunication (73), vers le deuxième terminal d'utilisateur par l'intermédiaire du numéro de téléphone préconfiguré,
où l'envoi des premières données vocales au deuxième terminal d'utilisateur comprend :
l'envoi, au moyen du serveur vocal, des premières données vocales au serveur de télécommunication (73), et
l'ordre donné au serveur de télécommunication (73) d'envoyer les premières données vocales au deuxième terminal d'utilisateur en réponse à une détermination que l'appel vers le deuxième terminal d'utilisateur (708) est établi,
les un ou plusieurs processeurs étant configurés en outre de façon à :
recevoir des deuxièmes données vocales envoyées à partir du deuxième terminal d'utilisateur en réponse aux premières données vocales, et
envoyer les deuxièmes données vocales au premier terminal d'utilisateur, comprenant :
l'envoi d'un fichier vocal contenant les deuxièmes données vocales au premier terminal d'utilisateur, et
la lecture du fichier vocal sur le premier terminal d'utilisateur, et
une ou plusieurs mémoires couplées aux un ou plusieurs processeurs, configurées de façon à fournir des instructions aux un ou plusieurs processeurs.

8. Le système selon la Revendication 7, où les données textuelles sont un message instantané entré par le premier utilisateur au niveau du premier terminal d'utilisateur.

9. Le système selon la Revendication 7, où les données textuelles sont envoyées au serveur vocal configuré de façon à exécuter une opération de texte à parole.

10. Le système selon la Revendication 7, où le numéro de téléphone préconfiguré est configuré sur un serveur vocal configuré de façon à transformer les données textuelles en les premières données vocales.

11. Le système selon la Revendication 7, où la pluralité de numéros de téléphone préconfigurés correspond à une pluralité de zones.

12. Le système selon la Revendication 11, où les un ou plusieurs processeurs sont configurés en outre de façon à sélectionner le numéro de téléphone préconfiguré parmi la pluralité de numéros de téléphone préconfigurés, comprenant :
la détermination d'une adresse protocole Internet "IP" associée au premier terminal d'utilisateur,
la détermination d'un emplacement associé au premier terminal d'utilisateur, et
la sélection du numéro de téléphone préconfiguré parmi la pluralité de numéros de téléphone préconfigurés en fonction de la zone associée à l'adresse IP et de la pluralité de zones associées aux numéros de téléphone préconfigurés.

13. Un produit de programme informatique qui est incorporé dans un support à mémoire lisible par ordinateur et comprenant des instructions informatiques qui, lorsqu'elles sont exécutées sur un ou plusieurs processeurs, amènent les un ou plusieurs processeurs à exécuter les opérations suivantes :
la réception de données textuelles envoyées par un premier utilisateur à partir d'un premier terminal d'utilisateur (705),
la transformation, au moyen d'un serveur vocal (721), des données textuelles en premières données vocales,
l'envoi, au moyen d'un serveur de télécommunication (73), des premières données vocales à un deuxième terminal d'utilisateur (708) qui est associé à un numéro de téléphone préconfiguré, et
ledit produit de programme informatique comprenant des instructions destinées à amener les un ou plusieurs processeurs à exécuter les opérations complémentaires suivantes :
la sélection du numéro de téléphone préconfiguré parmi une pluralité de numéros de téléphone préconfigurés, où la pluralité de numéros de téléphone préconfigurés correspond à une pluralité de périodes temporelles, où la sélection du numéro de téléphone préconfiguré comprend :
le lancement d'un appel, au moyen du serveur de télécommunication (73), vers le deuxième terminal d'utilisateur par l'intermédiaire du numéro de téléphone préconfiguré,
où l'envoi des premières données vocales au deuxième terminal d'utilisateur comprend :
l'envoi, au moyen du serveur vocal, des premières données vocales au serveur de télécommunication (73), et
l'ordre donné au serveur de télécommunication (73) d'envoyer les premières données vocales au deuxième terminal d'utilisateur en réponse à une détermination que l'appel vers le deuxième terminal d'utilisateur (708) est établi,
ledit produit de programme informatique comprenant des instructions destinées à amener les un ou plusieurs processeurs à exécuter les opérations complémentaires suivantes :
la réception de deuxièmes données vocales envoyées à partir du deuxième terminal d'utilisateur en réponse aux premières données vocales, et
l'envoi des deuxièmes données vocales au premier terminal d'utilisateur, comprenant :
l'envoi d'un fichier vocal contenant les deuxièmes données vocales au premier terminal d'utilisateur, et
la lecture du fichier vocal sur le premier terminal d'utilisateur.
